# EUROPEAN PATENT APPLICATION

(11) **EP 4 456 462 A1**
(43) Date of publication of application: **30.10.2024**
(21) Application number: 22910137.3
(22) Date of filing: 22.12.2022
(51) Int. Cl.: H04L 1/06, H04B 7/00, H04W 24/00

(54) **CSI PREDICTION METHOD AND APPARATUS, COMMUNICATION DEVICE AND READABLE STORAGE MEDIUM**

(30) Priority: 23.12.2021 CN 202111590505
(71) Applicant: VIVO MOBILE COMMUNICATION CO., LTD., Dongguan, Guangdong 523863 (CN)
(72) Inventor: LI, Jialin, Dongguan, Guangdong 523863 (CN); YANG, Ang, Dongguan, Guangdong 523863 (CN); SUN, Peng, Dongguan, Guangdong 523863 (CN)
(74) Representative: Lavoix
(86) International application number: PCT/CN2022/141037
(87) International publication number: WO 2023/116826

(57) **Abstract**

This application discloses a CSI prediction method and apparatus, a communication device, and a readable storage medium. The method includes: in a case that a terminal meets a triggering condition for CSI prediction and the terminal receives first information, performing, by the terminal, CSI prediction to obtain predicted CSI content, where the first information is used to indicate the terminal to perform CSI prediction.

## Description

### CROSS-REFERENCE TO RELATED APPLICATIONS

This application claims priority to Chinese Patent Application No. 202111590505.4, filed in China on December 23, 2021, which is incorporated herein by reference in its entirety.

### TECHNICAL FIELD

This application pertains to the field of communication technologies, and specifically, relates to a CSI prediction method and apparatus, a communication device, and a readable storage medium.

### BACKGROUND

Channel state information (Channel State Information, CSI) is channel state information reported by a terminal to a base station. The basic principle is that the base station configures appropriate CSI reference signal (CSI Reference Signal, CSI-RS) resources for the terminal, and then the terminal performs measurement on the CSI-RS and calculates required CSI. Finally, the terminal reports it to the base station through physical uplink control channel (Physical Uplink Control Channel, PUCCH)/physical uplink shared channel (Physical Uplink Shared Channel, PUSCH).

The CSI mainly includes: channel quality indicator (Channel Quality Indicator, CQI), precoding matrix indicator (Precoding Matrix Indicator, PMI), rank indicator (Rank Indicator, RI), CSI-RS resource indicator (CSI-RS Resource Indicator, CRI), SS/PBCH resource block indicator (SS/PBCH Resource Block Indicator, SSBRI), layer indicator (Layer Indicator, LI), and L1 reference signal received power (Layer 1 reference signal received power, L1-RSRP).

At present, a frame design of CSI reporting in a case of measurement in the new radio (New Radio, NR) systems is relatively complete. However, after the prediction technology is introduced, how to trigger the terminal to obtain CSI content (or described as CSI measurement information) through prediction is an urgent problem to be resolved.

### SUMMARY

Embodiments of this application provide a CSI prediction method and apparatus, a communication device, and a readable storage medium, which can resolve the problem of how to trigger a terminal to obtain CSI content through prediction.

According to a first aspect, a CSI prediction method is provided, including:
in a case that a terminal meets a triggering condition for CSI prediction and the terminal receives first information, performing, by the terminal, CSI prediction to obtain predicted CSI content, where the first information is used to indicate the terminal to perform CSI prediction.

According to a second aspect, a CSI prediction method is provided, including:
sending, by a network-side device, first information, where the first information is used to indicate a terminal to perform CSI prediction.

According to a third aspect, a CSI prediction apparatus is provided, applied to a terminal and including:
a prediction module, configured to: in a case that the terminal meets a triggering condition for CSI prediction and the terminal receives first information, perform, for the terminal, CSI prediction to obtain predicted CSI content, where the first information is used to indicate the terminal to perform CSI prediction.

According to a fourth aspect, a CSI prediction apparatus is provided, applied to a network-side device and including:
a fourth sending module, configured to send first information, where the first information is used to indicate a terminal to perform CSI prediction.

According to a fifth aspect, a communication device is provided, including a processor, a memory, and a program or an instruction stored in the memory and capable of running on the processor, and when the program or instruction is executed by the processor, the steps of the method according to the first aspect are implemented.

According to a sixth aspect, a readable storage medium is provided, where a program or an instruction is stored in the readable storage medium, and when the program or the instruction is executed by a processor, the steps of the method according to the first aspect are implemented.

According to a seventh aspect, a chip is provided, where the chip includes a processor and a communication interface, the communication interface is coupled to the processor, and the processor is configured to run a program or an instruction to implement the steps of the method according to the first aspect.

According to an eighth aspect, a computer program product is provided, where the computer program product is stored in a non-transitory storage medium, and the computer program product is executed by at least one processor to implement the steps of the method according to the first aspect.

In the embodiments of this application, in a case that the terminal meets the triggering condition for CSI prediction and the terminal receives the first information, the terminal performs CSI prediction to obtain the predicted CSI content, which improves a triggering mode of CSI prediction on the terminal side and further improves a reporting procedure of the predicted CSI content. By replacing CSI measurement with CSI prediction, spectrum resources can be effectively reduced. During the validity period of the CSI prediction model, the network-side device can use preset CSI-RS resources for transmission of other information, which enhances transmission performance in fast channel switching scenarios.

### BRIEF DESCRIPTION OF DRAWINGS

FIG. 1 is a flowchart of periodic reporting;
FIG. 2 is a flowchart of semi-persistent reporting;
FIG. 3 is a flowchart of aperiodic reporting;
FIG. 4 is a schematic diagram of CPU occupancy time of aperiodic/periodic CSI and semi-persistent CSI reporting that is not triggered for the first time;
FIG. 5 is a block diagram of a wireless communication system to which the embodiments of this application are applicable;
FIG. 6 is a first flowchart of a CSI prediction method according to an embodiment of this application;
FIG. 7 is a second flowchart of a CSI prediction method according to an embodiment of this application;
FIG. 8 is a schematic diagram of replacing CSI periodic measurement reporting with CSI prediction reporting according to an embodiment of this application;
FIG. 9 is a first schematic diagram of a CSI prediction apparatus according to an embodiment of this application;
FIG. 10 is a second schematic diagram of a CSI prediction apparatus according to an embodiment of this application;
FIG. 11 is a schematic diagram of a terminal according to an embodiment of this application;
FIG. 12 is a schematic diagram of a network-side device according to an embodiment of this application; and
FIG. 13 is a schematic diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way are interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

For ease of understanding the embodiments of this application, the following technical points are first described.

### I. About CSI measurement and reporting

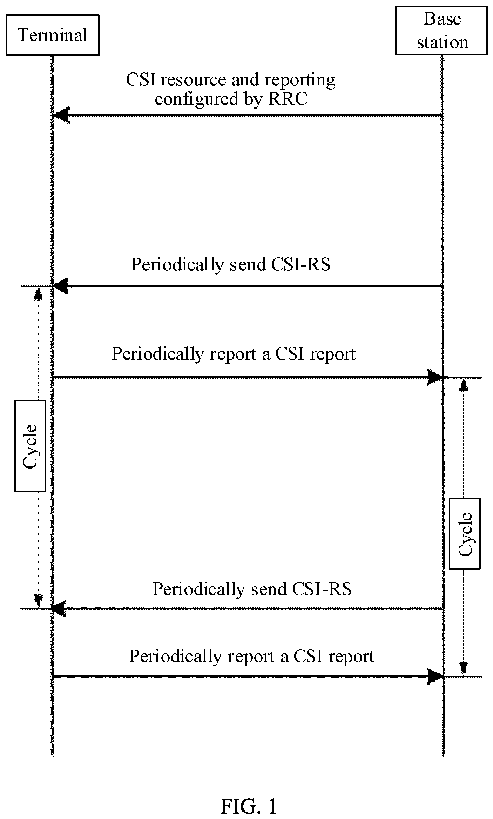

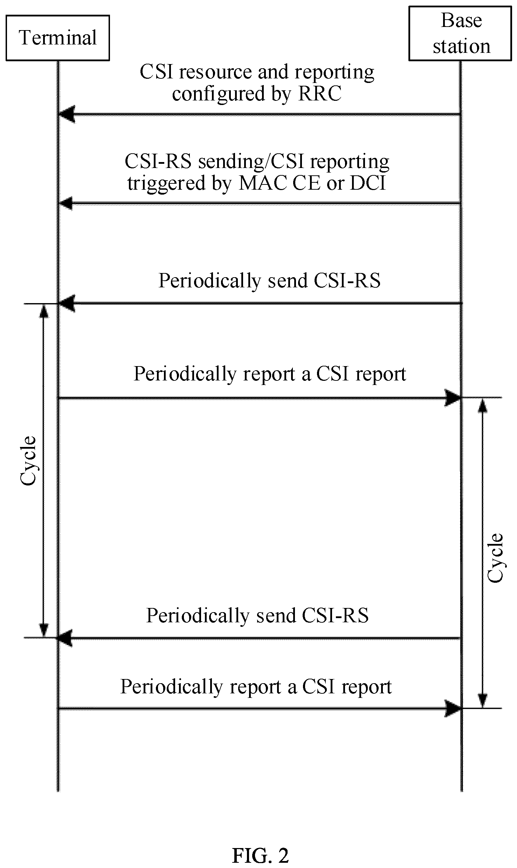

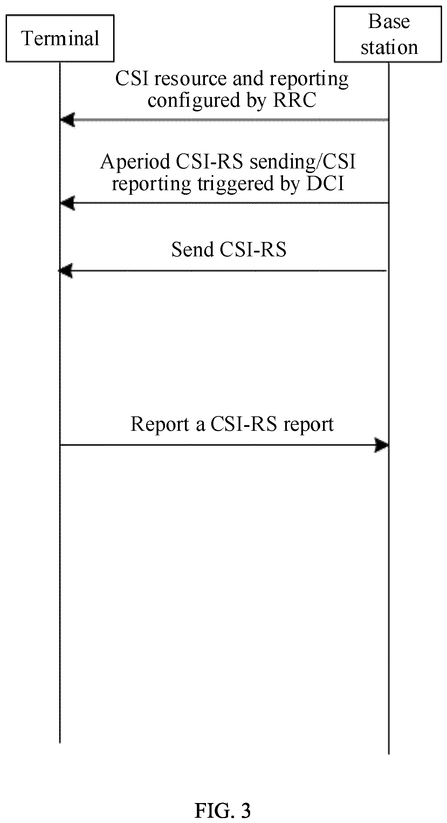

At present, the new radio (New Radio, NR) technology supports periodic, semi-persistent, or aperiodic CSI measurement and reporting. Refer to FIG. 1, FIG. 2, and FIG. 3. The figures illustrate CSI reporting procedures of different types.

Periodic CSI measurement and reporting are configured by radio resource control (Radio Resource Control, RRC) signaling, with no need to additionally trigger reporting. Semi-persistent CSI is somewhat similar to periodic CSI, and the difference is that additional triggering is required. After completing configuration by using RRC signaling, a base station needs to further use trigger information of medium access control (Medium Access Control, MAC) control element (Control Element, CE) or downlink control information (Downlink Control Information, DCI) to implement periodic CSI measurement and reporting, with no need to perform reporting before receiving the triggering information. For aperiodic CSI, measurement and reporting can only be triggered through DCI.

### II. About CSI processing unit (CSI Processing Units, CPU)

CSI measurement and reporting are completed by using a CSI CPU. The CPU indicates a CSI capability of the terminal. The terminal first reports, to the base station, the maximum number of CPUs supported by the terminal, and the number of CPUs occupied by different CSI reporting contents is different. The base station configures appropriate CSI reporting according to the maximum number of CPUs notified by the terminal, and the number of CPUs used for conventional CSI reporting is the same as the number of channel measurement resources (Channel Measurement Resource, CMR). When the base station configures a plurality of types of CSIs for the terminal and the number of CPUs supported by the terminal is exceeded during simultaneous processing, CSI with higher priority is preferentially processed; if the number of remaining CPUs is still enough to process CSI with lower priority, the CSI with lower priority is then processed; which proceeds until the number of remaining CPUs is not enough for processing of a CSI, and the CSI is then not processed or updated.

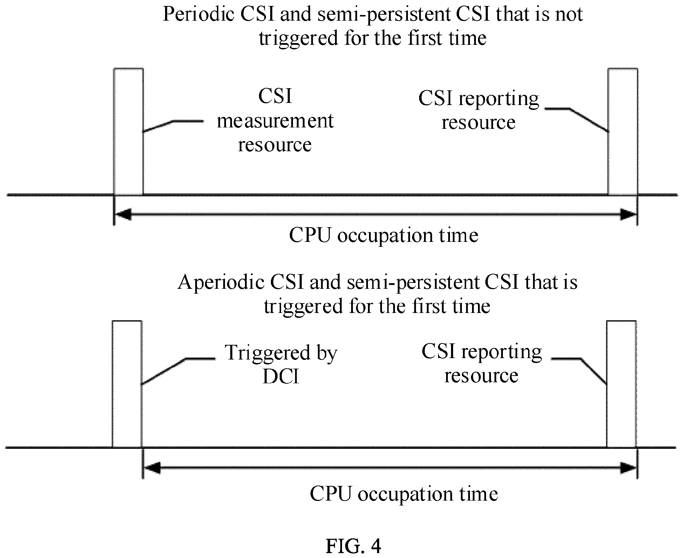

The CPU occupancy time is mainly divided into two types. One is periodic CSI and semi-persistent CSI that is not triggered for the first time; and the CPU occupancy time of this type of CSI starts from the 1 st symbol of a CSI-RS measurement resource and ends at the last symbol of a reporting resource. The other is aperiodic CSI and semi-persistent CSI that is triggered for the first time; and the CPU occupancy time of this type of CSI starts from the 1st symbol after triggering of the physical downlink control channel (Physical downlink control channel, PDCCH) and ends at the last symbol of a reporting resource, as shown in FIG. 4.

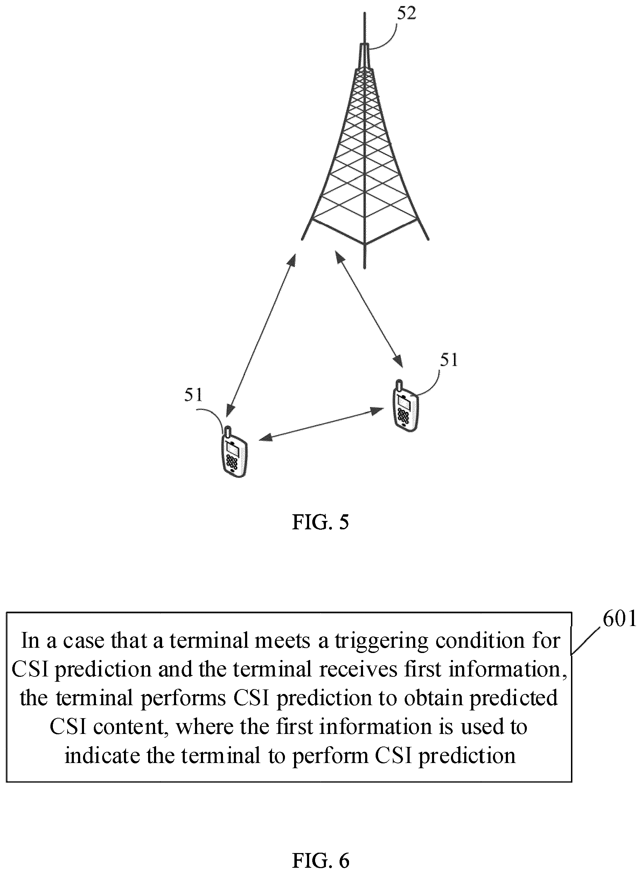

FIG. 5 is a block diagram of a wireless communication system to which the embodiments of this application are applicable. The wireless communication system includes a terminal 51 and a network-side device 52. The terminal 51 may be a terminal-side device, such as a mobile phone, a tablet computer (Tablet Personal Computer, TPC), a laptop computer (Laptop Computer, LC) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device, WD), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 51 is not limited in the embodiments of this application. The network-side device 52 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

With reference to the accompanying drawings, the following describes in detail, by using some embodiments and application scenarios thereof, a CSI prediction method and apparatus, a communication device, and a readable storage medium provided in the embodiments of this application.

Referring to FIG. 6, an embodiment of this application provides a CSI prediction method. The execution subject of the method is a terminal, and the specific steps include: step 601.

Step 601: In a case that the terminal meets a triggering condition for CSI prediction and the terminal receives first information, the terminal performs CSI prediction to obtain predicted CSI content, where the first information is used to indicate the terminal to perform CSI prediction.

Optionally, the terminal receives RRC signaling, medium access control (Medium Access Control, MAC) control element (Control Element, CE), downlink control information (Downlink Control Information, DCI) signaling, or the like. The RRC signaling, the MAC CE, or the DCI signaling carries the first information.

It can be understood that the terminal performs CSI prediction only when two conditions (condition 1 and condition 2) are met. CSI prediction refers to that CSI obtained by the terminal through collecting CSI-RS resources of historical measurement is used as CSI in a future moment, that is, the terminal has the function of CSI prediction and judgment, and the terminal can replace real CSI measurement by CSI prediction.

The condition 1 is that the terminal meets the triggering condition for CSI prediction.

The condition 2 is that the terminal receives the first information. For example, based on the first information, the terminal may obtain a to-be-activated CSI prediction model indicated by the network side and determine whether a CSI prediction threshold is met.

It can be understood that in this embodiment of this application, there is no restriction on a sequence of the terminal determining whether the triggering condition for CSI prediction is met and the terminal receiving the first information. For example, the terminal may first determine whether the triggering condition for CSI prediction is met and then receive the first information, the terminal may first receive the first information and then determine whether the triggering condition for CSI prediction is met, or the terminal may determine whether the triggering condition for CSI prediction is met and simultaneously receive the first information.

In an implementation of this application, the triggering condition for CSI prediction includes one or more of the following:
(1) A difference between the latest CSI content and a first value is greater than or equal to a second threshold, and the first value is determined based on CSI contents of previous consecutive cycles.

Optionally, the first value may be a smoothing value or an average value of the CSI contents of the previous consecutive cycles. For example, based on a smoothing value of CSI contents (precoding matrix indicator (Precoding matrix indicator, PMI), channel quality indicator (Channel quality indicator, CQI), reference signal received power (Reference Signal Received Power, RSRP), or the like) of historical consecutive cycles, if a difference between the latest measurement content and the smoothing value is excessively large, it means that the terminal meets the triggering condition for CSI prediction.

(2) A difference between two most recent consecutive CSI contents is greater than or equal to a third threshold.

(3) A location area identifier currently received by the terminal is different from a location area identifier previously received by the terminal.

For example, through monitoring on broadcast information (such as system information block (System Information Block, SIB) 1 information) continuously sent by the base station, the terminal detects that a newly received location area identifier is different from a previous location area identifier, which indicates that the terminal meets the triggering condition for CSI prediction.

(4) Hybrid automatic repeat request (Hybrid Automatic Repeat Request, HARQ) fails a plurality of times in one cycle.

(5) A variation of a moving speed of the terminal is greater than or equal to a fourth threshold.

For example, a moving speed of the terminal changes obviously, which indicates that the terminal meets the triggering condition for CSI prediction.

In an implementation of this application, that the terminal performs CSI prediction includes:
the terminal activates a CSI prediction model (or described as a CSI prediction network) according to the first information, and performs CSI prediction through the activated CSI prediction model to obtain the predicted CSI content.

Input information of the CSI prediction model includes CSI acquired from historical measurements on CSI-RS resources obtained by the terminal.

Optionally, the CSI prediction model may be an artificial intelligence (Artificial Intelligence, AI) network, a prediction algorithm, a linear prediction model, a polynomial fitting prediction model, and the like, which is certainly not limited to this.

In an implementation of this application, the activating, by the terminal, a CSI prediction model according to the first information, and performing CSI prediction through the activated CSI prediction model to obtain the predicted CSI content includes:
obtaining, by the terminal, a to-be-activated CSI prediction model and a sample threshold for the CSI prediction model according to the first information;
activating, by the terminal, a corresponding CSI prediction model; and
in a case that an amount of CSI measurement data of the terminal is greater than or equal to the sample threshold for the CSI prediction model, performing, by the terminal, CSI prediction through the activated CSI prediction model to obtain the predicted CSI content.

Optionally, the first information includes information about the to-be-activated CSI prediction model (for example, an identifier (ID) of the to-be-activated CSI prediction model) and a sample threshold for the CSI prediction model.

It can be understood that the sample threshold for the CSI prediction model is used for determining whether the CSI prediction model can be used for CSI prediction. Only when an amount of CSI measurement data (equivalent to historical CSI measurement data) of the terminal is greater than or equal to the sample threshold for the CSI prediction model, the CSI prediction model can be used for CSI prediction, or it can be understood that the CSI content predicted by using the CSI prediction model more approximates to the actually measured CSI content.

In another implementation of this application, the terminal obtains the to-be-activated CSI prediction model according to the first information;
the terminal activates a corresponding CSI prediction model; and
the terminal performs CSI prediction through the activated CSI prediction model to obtain the predicted CSI content.

The first information includes the information about the to-be-activated CSI prediction model, and the sample threshold for the CSI prediction model may be configured for the terminal by the network side during initial access to a cell by the terminal.

It can be understood that the activated CSI prediction model can implement prediction of CSI contents (or described as CSI information) for a future moment.

The terminal may report the predicted CSI content after completing CSI prediction for the future moment.

In an implementation of this application, the to-be-activated CSI prediction model is a CSI prediction model corresponding to location information of the terminal.

It can be understood that a coverage area of the network is divided into many location zones, which are distinguished by different location areas, and the network may update location area changes of the terminal in real time to implement location area registration. Based on the location area of the current terminal and CSI measurement information, the network-side device may inform the terminal which CSI prediction model network to activate.

In another implementation of this application, the to-be-activated CSI prediction model is a CSI prediction model corresponding to a channel characteristic (such as CQI, PMI, or Doppler frequency offset information) measured.

In an implementation of this application, the CSI prediction model is configured by a network-side device.

For example, when the terminal accesses a cell/base station, the network side configures a CSI prediction model for the terminal through RRC signaling. In this case, the CSI prediction model is in a state of being to be activated, and the terminal cannot determine itself whether the CSI prediction model needs to be activated for CSI prediction.

In an implementation of this application, before receiving the first information, the method further includes:
the terminal sends second information (or described as CSI prediction indication information) through a first resource (or described as a preset common resource or a time-frequency resource for CSI prediction reporting indication), where that second information is used for indicating that the terminal meets the triggering condition for CSI prediction.

The first information is sent by the network-side device when the network-side device detects that an energy (which may be signal power such as RSRP or received signal strength indication (Received Signal Strength Indication, RSSI) on the first resource is greater than or equal to a first threshold (or described as a predicted energy threshold), and optionally, the first resource is configured by the network-side device.

The second information is one type of feedback information, which can be an acknowledgement (Acknowledgement, ACK) or a negative acknowledgement (Negative Acknowledgement, NACK), and the network-side device does not need to decode the second information.

It can be understood that the network-side device can keep a current CSI obtaining mode if the network-side device detects that the energy on the first resource is less than the first threshold.

In an implementation of this application, the method further includes:
reporting, by the terminal, the predicted CSI content and/or third information (or described as prediction assistance information) to a network-side device, where the third information is used for assisting the terminal in CSI prediction by the network-side device.

It can be understood that in addition to the predicted CSI content, the terminal may also report the prediction assistance information to the network-side device during CSI prediction reporting, so that the network-side device assists the terminal in CSI prediction.

In an implementation of this application, the third information indicates the network-side device to stop (or postpone) sending CSI-RS, for example, the terminal informs the network-side device to stop or postpone sending periodic, aperiodic or semi-persistent CSI-RS.

Optionally, the third information includes one or more of the following:
(1) fourth information, where the fourth information is used to indicate a time for reporting the predicted CSI content by the terminal;
(2) fifth information, where the fifth information indicates an offset time for sending a CSI-RS by the network-side device; and
(3) sixth information, where the sixth information indicates an offset time for reporting CSI content by the terminal.

It can be understood that the network-side device may receive "time for reporting predicted CSI content by terminal" and/or "offset time for reporting CSI content by terminal" reported by a plurality of different terminals. The network-side device can select one "time for reporting predicted CSI content by terminal" and/or "offset time for reporting CSI content by terminal" from the plurality of different "time for reporting predicted CSI content by terminal" and/or "offset time for reporting CSI content by terminal". For example, the network-side device may perform selection based on a time length of "time for reporting predicted CSI content by terminal" and/or "offset time for reporting CSI content by terminal". The selection rule is not specifically limited in this embodiment of this application.

In another implementation of this application, the third information indicates the network-side device to send a CSI-RS based on a preconfigured time.

Optionally, the third information includes one or more of the following:
(1) seventh information, where the seventh information is used to indicate expiration of a time for reporting the predicted CSI content by the terminal; and
(2) eighth information, where the eighth information indicates that the time for reporting the predicted CSI content (or described as remaining time) by the terminal is less than one CSI measurement reporting time.

In an implementation of this application, before the reporting, by the terminal, the predicted CSI content to a network-side device, the method further includes:
starting, by the terminal, a timer; and
if the timer expires, stopping, by the terminal, CSI prediction and continuing to perform CSI measurement; otherwise, continuing, by the terminal, to perform CSI prediction.

In an implementation of this application, the timer indicates a time for continuously reporting the predicted CSI content by the terminal, or the timer indicates a validity time of the CSI prediction model.

It can be understood that before reporting the predicted CSI content, the terminal can initialize a timer. When the timer expires, the CSI prediction stops and CSI measurement continues. Further, the CSI prediction model can be updated online during the CSI measurement time.

In an implementation of this application, before the reporting, by the terminal, the predicted CSI content to a network-side device, the method further includes:
starting, by the terminal, a counter; and
if the counter exceeds a fifth threshold, stopping, by the terminal, CSI prediction and continuing to perform CSI measurement; otherwise, continuing, by the terminal, to perform CSI prediction.

In an implementation of this application, the counter indicates a maximum number of cycles for reporting the predicted CSI content supported by the terminal, or the counter indicates the maximum number of times for reporting the predicted CSI content by the terminal.

In an implementation of this application, the method further includes: sending, by the terminal, information about the timer or counter to the network-side device.

It can be understood that the terminal may send the predicted CSI content, the information about the timer or counter used for CSI prediction, and the third information (or described as prediction assistance information) to the network-side device during CSI reporting.

In an implementation of this application, the network side can configure the prediction granularity of the CSI prediction model, or the terminal can independently determine the prediction granularity of the CSI prediction model, where the prediction granularity of the CSI prediction model represents the minimum granularity of CSI content predicted by the CSI prediction model.

The prediction granularity of the CSI prediction model includes any one of the following:
(1) CSI of one time unit.
   That is, the CSI prediction model may be used to predict CSI of a time unit in the future.
(2) CSI at a retransmission time.
   That is, the CSI prediction model can be used for predicting the CSI at the retransmission time.
(3) CSIs of all time units within one CSI measurement reporting cycle.
   That is, the CSI prediction model can be used for predicting CSIs of all time units in a CSI measurement reporting cycle in the future, where the CSI measurement reporting cycle may be a period for reporting a CSI report (report) by the terminal.
(4) CSIs of all time units within each CSI measurement reporting cycle.

That is, the CSI prediction model may be used for predicting CSIs of all time units within each CSI measurement reporting cycle in the future.

Optionally, the time unit may be slot, sub-slot, symbol, or transmission time interval (Transmission Time Interval, TTI).

In an implementation of this application, a granularity for reporting the predicted CSI content includes any one of the following:
(1) One CSI content predicted by the CSI prediction model.
   That is, the CSI prediction model predicts one CSI content, and the terminal reports one predicted CSI content.
(2) Batch reporting of CSI contents within a plurality of time units or cycles predicted by the CSI prediction model.
(3) Reporting of all CSI contents within a plurality of time units or cycles predicted by the CSI prediction model.

The terminal may further process the predicted CSI content through the CPU during the prediction process of the CSI prediction model. There are two states in the CSI prediction model: one is a training period (model updating period) and the other is a validity period. The CSI prediction model cannot perform CSI prediction during the training period.
(1) When the CSI prediction model is in the training period:
   1-1: The number of CPUs
      Because measured information on each CSI-RS resource is collected for updating the CSI prediction model, the number of CPUs for the CSI prediction model during the training period is the same as the number of CSI-RS resources.
   1-2: CPU occupancy time: from the last symbol of a reporting resource to the end of sending CSI measurement information (or described as CSI content) into the CSI prediction model.
(2) When the CSI prediction model is in the validity period:
   2-1: The number of CPUs
   2-1-1: In the validity period, the CSI prediction model also collects channel information measured on each CSI-RS resource as an input of the CSI prediction model, and therefore the number of CPUs for the CSI prediction model during the validity period is the same as the number of CSI-RS resources.
   2-2: CPU occupancy time
   2-2-1: Predicted sample threshold being not reached:
      from the last symbol of the reporting resource to the end of sending CSI measurement information into the CSI prediction model.
   2-2-2: Predicted sample threshold being reached:
      from the last symbol of the reporting resource to the end of prediction of the CSI prediction model.

The CSI prediction model may perform CSI prediction at the same time as CSI measurement reporting during the CPU occupation period. If the base station configures a plurality of CSIs for the terminal and the plurality of CSIs take effect at the same time, the maximum number of CPUs supported by the terminal may be exceeded, resulting in conflict. In this case, the priority of CSI measurement and CSI prediction should follow the following rules:
Rule 1: aperiodic CSI measurement > PUSCH semi-persistent SP-CSI measurement (Semi-Persistent, SP-CSI) > PUCCH SP-CSI measurement > periodic CSI measurement > CSI sample collection/prediction.
Rule 2: CSI measurement for beam management > obtaining CSI through measurement > CSI collection/prediction.

After the above rules are used, if there is no CPU available, current CSI measurement information is not used for collection, prediction, or is delayed for collection and prediction. Especially, if it is delayed for prediction, its time should not be later than the next CSI measurement reporting time. If it is later than the next CSI measurement reporting time, the current CSI measurement information can be discarded.

In this embodiment of this application, in a case that the terminal meets the triggering condition for CSI prediction, the terminal receives the first information, and the first information is used to indicate the terminal to perform CSI prediction. In a case that the terminal has received the first information, the terminal performs CSI prediction to obtain the predicted CSI content, which improves a triggering mode of CSI prediction on the terminal side and further improves a reporting procedure of the predicted CSI content. By replacing CSI measurement with CSI prediction, spectrum resources can be effectively reduced. During the validity period of the CSI prediction model, the network-side device can use preset CSI-RS resources for transmission of other information, which enhances transmission performance in fast channel switching scenarios.

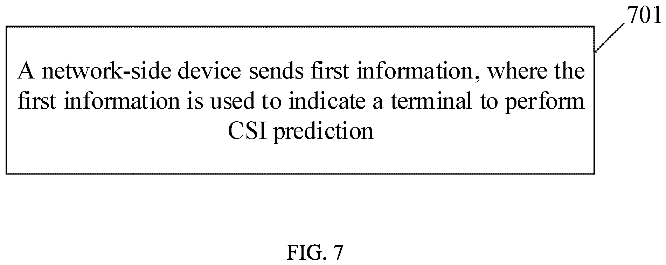

Referring to FIG. 7, an embodiment of this application provides a CSI prediction method. The execution subject of the method may be a network-side device, such as a base station, and the specific steps include: step 701.

Step 701: The network-side device sends first information, where the first information is used to indicate a terminal to perform CSI prediction.

In an implementation of this application, that the network-side device sends the first information includes:
the network-side device receives second information through a first resource, where the second information is used to indicate that the terminal meets the triggering condition of CSI prediction; and
in a case that the network-side device detects an energy on the first resource being greater than or equal to a first threshold, the network-side device sends the first information.

In an implementation of this application, the triggering condition for CSI prediction includes one or more of the following:
(1) a difference between the latest CSI content and a first value is greater than or equal to a second threshold, where the first value is determined based on CSI contents within consecutive cycles;
(2) a difference between two most recent consecutive CSI contents is greater than or equal to a third threshold;
(3) a location area identifier currently received by the terminal is different from a location area identifier previously received by the terminal;
(4) HARQ fails a plurality of times in one cycle; and
(5) a variation of a moving speed of the terminal is greater than or equal to a fourth threshold.

In an implementation of this application, the method further includes:
the network-side device receives predicted CSI content and/or third information reported by the terminal, where the third information is used for assisting the terminal in CSI prediction by the network-side device.

In this embodiment of this application, the network-side device sends the first information, where the first information is used to indicate the terminal to perform CSI prediction, thus improving a triggering mode of CSI prediction on the terminal side. By replacing CSI measurement with CSI prediction, spectrum resources can be effectively reduced. During the validity period of the CSI prediction model, the network-side device can use preset CSI-RS resources for transmission of other information, which enhances transmission performance in fast channel switching scenarios.

### Embodiment 1:

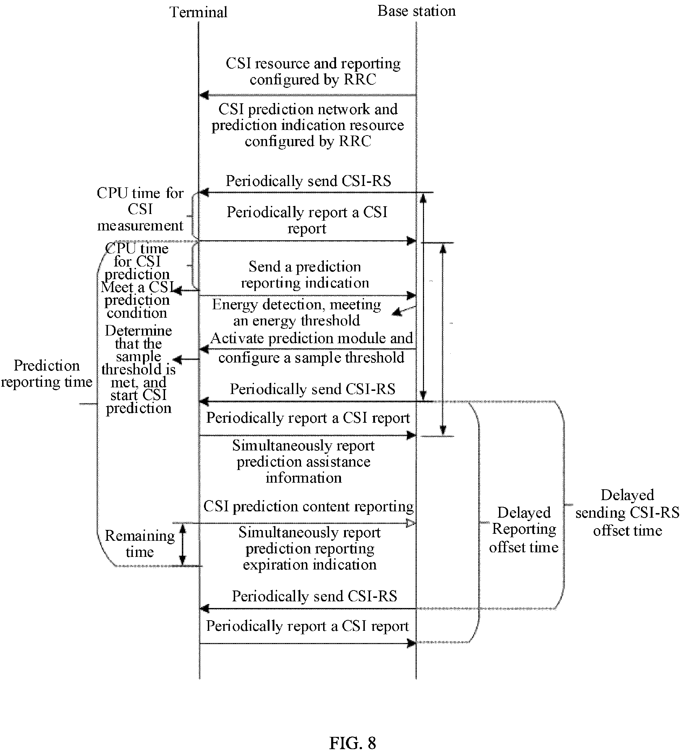

The following describes the process of replacing CSI measurement with CSI prediction, as shown in FIG. 8, and the specific steps are as follows:
Step 1: The base station informs the terminal of CSI-RS transmission time and time-frequency resource position, CSI prediction model, and time-frequency resource position for CSI prediction reporting indication through RRC signaling.
Step 2: When the preset CSI-RS transmission time is reached, the base station transmits a CSI-RS on the preset resource. The terminal occupies CPUs to perform measurement on the CSI-RS on an agreed resource and process the measurement information until the CSI is reported at the preset CSI reporting time.
Step 3: After the measurement reporting of the terminal is completed, the CSI prediction and judgment function is started, and the CPUs continue to be occupied.
   (a) If the CSI prediction model takes effect, the CSI prediction model is used for CSI content (or described as CSI measurement data) transfer and storage, CSI data sorting, CSI prediction, and CSI prediction reporting detection during the CPU occupation period.
   (b) If the CSI prediction model has not taken effect, the CSI prediction model is used only for CSI content transfer and storage and CSI data sorting during the CPU occupation period.

If the number of CPUs is insufficient at that time, processing stops until the number of CPUs becomes sufficient. It should be noted that if a waiting time (Twaiting) is greater than a next CSI measurement time (T), the current CSI content is dropped and data transfer and processing are not performed.

Step 4: The terminal determines whether the CSI prediction condition is met. If the condition is met, the CSI prediction reporting indication is sent at an agreed time-frequency resource position for CSI prediction reporting indication.

Step 5: The base station detects whether an energy value of a time-frequency resource for preset CSI prediction reporting indication meets a threshold. If the threshold is met, the CSI prediction model of the terminal is activated by DCI signaling and the sample threshold for the CSI prediction model is informed to the terminal.

Step 6: The terminal determines whether an amount of CSI measurement data is greater than the sample threshold for the CSI prediction model.
(a) if the amount of CSI measurement data is greater than or equal to the sample threshold for the CSI prediction model, CSI prediction is performed, and the terminal reports the predicted CSI content and CSI prediction assistance information upon the next CSI reporting; otherwise, CSI prediction is not performed this time. The reporting function of prediction assistance information may be:
   i. informing the base station that the terminal is to perform CSI prediction reporting next time, and carrying a CSI-RS transmission offset time and CSI measurement reporting offset time T_{offset} suggested for the base station until T_{offset} expires; otherwise, the base station delays sending CSI-RS all the time, and the terminal neither performs measurement operation; or
   ii. after receiving the CSI prediction reporting indication of the terminal, the base station delays sending CSI-RS until the remaining time T_{residue} of the prediction reporting time calculated before a CSI prediction reporting. If T_{residue} is less than the next measurement time T, the current CSI prediction reporting content needs to carry a CSI prediction reporting expiration indication. After receiving the CSI prediction reporting expiration indication, the base station ends delayed CSI-RS transmission and starts to send CSI-RS periodically according to an initial period configured by RRC; and the terminal also ends delayed measurement and reporting of CSI-RS, and starts CSI-RS measurement and reporting according to the initial period configured by RRC.

Provided that it is within the CSI prediction reporting time and the terminal has informed the base station of the CSI prediction reporting through a specific periodic CSI measurement reporting, the base station can temporarily delay sending CSI-RS for the next periodic CSI measurement reporting, and the terminal can directly report the predicted CSI on a preset periodic reporting time and resource. When the CSI prediction reporting time expires or the remaining time is less than one CSI reporting time, the base station starts transmission according to the initial period configured by RRC, and the terminal performs measurement and CSI reporting according to the preset CSI-RS transmission time and resource position.

For the CSI prediction method provided in the embodiments of this application, the execution subject can be a CSI prediction apparatus. In the embodiments of this application, the CSI prediction method being performed by the CSI prediction apparatus is used as an example to describe the CSI prediction apparatus provided in the embodiments of this application.

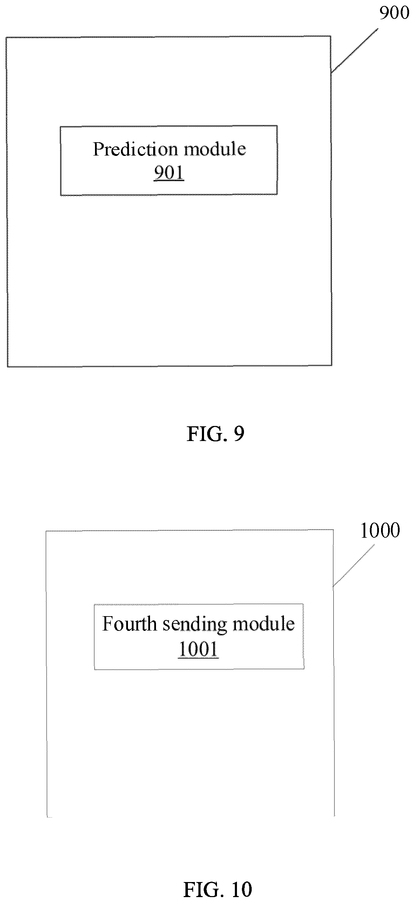

Referring to FIG. 9, an embodiment of this application provides a CSI prediction apparatus applied to a terminal, where the apparatus 900 includes:
a prediction module 901, configured to: in a case that the terminal meets a triggering condition for CSI prediction and the terminal receives first information, perform, for the terminal, CSI prediction to obtain predicted CSI content, where the first information is used to indicate the terminal to perform CSI prediction.

In an implementation of this application, the prediction module 901 is further configured to activate a CSI prediction model according to the first information, and perform CSI prediction through the activated CSI prediction model to obtain the predicted CSI content; where input information of the CSI prediction model includes CSI acquired from historical measurements on CSI-RS resources obtained by the terminal.

In an implementation of this application, the prediction module 901 is further configured to obtain a to-be-activated CSI prediction model and a sample threshold for the CSI prediction model according to the first information; activate a corresponding CSI prediction model; and in a case that an amount of CSI measurement data of the terminal is greater than or equal to the sample threshold for the CSI prediction model, perform CSI prediction through the activated CSI prediction model to obtain the predicted CSI content, where the first information includes the information about the to-be-activated CSI prediction model and the sample threshold for the CSI prediction model.

In another implementation of this application, the prediction module 901 is further configured to obtain a to-be-activated CSI prediction model according to the first information; activate a corresponding CSI prediction model; and perform CSI prediction through the activated CSI prediction model to obtain the predicted CSI content, where the first information includes the information about the to-be-activated CSI prediction model.

In an implementation of this application, the to-be-activated CSI prediction model is a CSI prediction model corresponding to location information of the terminal.

In an implementation of this application, the CSI prediction model is configured by a network-side device.

In another implementation of this application, the apparatus 900 further includes:
a first sending module, configured to send second information through a first resource, where the second information is used to indicate that the terminal meets the triggering condition of CSI prediction; where the first information is sent by the network-side device in a case that energy on the first resource is detected to be greater than or equal to a first threshold.

In an implementation of this application, the triggering condition for CSI prediction includes one or more of the following:
(1) a difference between the latest CSI content and a first value is greater than or equal to a second threshold, and the first value is determined based on CSI contents of previous consecutive cycles;
(2) a difference between two most recent consecutive CSI contents is greater than or equal to a third threshold;
(3) a location area identifier currently received by the terminal is different from a location area identifier previously received by the terminal;
(4) HARQ fails a plurality of times in one cycle; and
(5) a variation of a moving speed of the terminal is greater than or equal to a fourth threshold.

In an implementation of this application, the apparatus 900 further includes:
a second sending module, configured to report the predicted CSI content and/or third information to a network-side device, where the third information is used for assisting the terminal in CSI prediction by the network-side device.

In an implementation of this application, the third information indicates the network-side device to stop sending a CSI-RS.

In an implementation of this application, the third information includes one or more of the following:
(1) fourth information, where the fourth information is used to indicate a time for reporting the predicted CSI content by the terminal;
(2) fifth information, where the fifth information indicates an offset time for sending a CSI-RS by the network-side device; and
(3) sixth information, where the sixth information indicates an offset time for reporting CSI content by the terminal.

In an implementation of this application, the third information indicates the network-side device to send a CSI-RS based on a preconfigured time.

In an implementation of this application, the third information includes one or more of the following:
seventh information, where the seventh information is used to indicate expiration of a time for reporting the predicted CSI content by the terminal; and
eighth information, where the eighth information indicates that the remaining time for reporting the predicted CSI content by the terminal is less than one CSI measurement reporting time.

In an implementation of this application, the apparatus 900 further includes:
a first processing module configured to start a timer. If the timer expires, the prediction module 901 stops CSI prediction and continues to perform CSI measurement; otherwise, the prediction module 901 stops continue to perform CSI prediction.

In an implementation of this application, the timer indicates a time for continuously reporting the predicted CSI content by the terminal, or the timer indicates a validity time of the CSI prediction model.

In an implementation of this application, the apparatus 900 further includes:
a second processing module configured to start a counter. If the counter exceeds a fifth threshold, the prediction module 901 stops CSI prediction and continues to perform CSI measurement; otherwise, the prediction module 901 stops continue to perform CSI prediction.

In an implementation of this application, the counter indicates a maximum number of cycles for reporting the predicted CSI content supported by the terminal, or the counter indicates the maximum number of times for reporting the predicted CSI content by the terminal.

In an implementation of this application, the apparatus 900 further includes:
a third sending module, configured to send information about the timer or counter to the network-side device.

In an implementation of this application, a prediction granularity of the CSI prediction model includes any one of the following:
(1) CSI of one time unit;
(2) CSI at a retransmission time;
(3) CSIs of all time units within one CSI measurement reporting cycle; and
(4) CSIs of all time units within each CSI measurement reporting cycle.

In an implementation of this application, a granularity for reporting the predicted CSI content includes any one of the following:
(1) one CSI content predicted by the CSI prediction model;
(2) batch reporting of CSI contents within a plurality of time units or cycles predicted by the CSI prediction model; and
(3) reporting of all CSI contents within a plurality of time units or cycles predicted by the CSI prediction model.

The CSI prediction apparatus in this embodiment of this application may be an electronic device, such as an electronic device with an operating system, or a component in the electronic device, such as an integrated circuit or a chip. The electronic device may be a terminal. For example, the terminal may include, but is not limited to, the types of terminals listed above, which is not specifically limited in this embodiment of this application. The CSI prediction apparatus provided in this embodiment of this application is capable of implementing the processes implemented in the method embodiments in FIG. 6, with the same technical effects achieved. To avoid repetition, details are not described herein again.

Referring to FIG. 10, an embodiment of this application provides a CSI prediction apparatus applied to a network-side device, where the apparatus 1000 includes:
a fourth sending module 1001, configured to send first information, where the first information is used to indicate a terminal to perform CSI prediction.

In an implementation of this application, the fourth sending module 1001 further includes:
a receiving unit configured to receive second information through a first resource, where the second information is used to indicate that the terminal meets the triggering condition of CSI prediction; and
a sending unit configured to: in a case that the network-side device detects an energy on the first resource being greater than or equal to a first threshold, send the first information.

In an implementation of this application, the triggering condition for CSI prediction includes one or more of the following:
(1) a difference between the latest CSI content and a first value is greater than or equal to a second threshold, where the first value is determined based on CSI contents within consecutive cycles;
(2) a difference between two most recent consecutive CSI contents is greater than or equal to a third threshold;
(3) a location area identifier currently received by the terminal is different from a location area identifier previously received by the terminal;
(4) HARQ fails a plurality of times in one cycle; and
(5) a variation of a moving speed of the terminal is greater than or equal to a fourth threshold.

In an implementation of this application, the apparatus 1000 further includes:
a first receiving module configured to receive predicted CSI content and/or third information reported by the terminal, where the third information is used for assisting the terminal in CSI prediction by the network-side device.

The CSI prediction apparatus in this embodiment of this application may be an electronic device, such as an electronic device with an operating system, or a component in the electronic device, such as an integrated circuit or a chip. The electronic device may be a server or a network attached storage (Network Attached Storage, NAS), which is not specifically limited in this embodiment of this application.

The CSI prediction apparatus provided in this embodiment of this application is capable of implementing the processes implemented in the method embodiments in FIG. 7, with the same technical effects achieved. To avoid repetition, details are not described herein again.

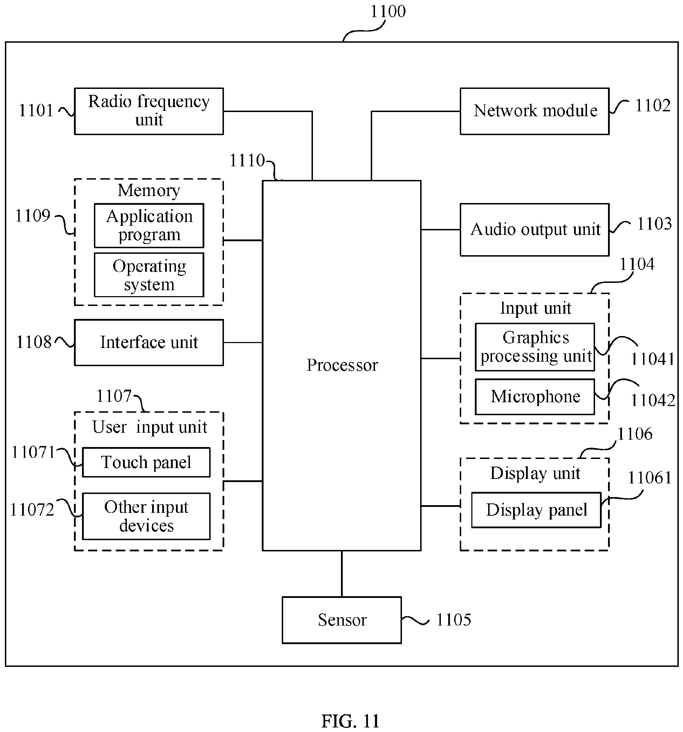

An embodiment of this application further provides a terminal, including a processor and a communication interface, where the processor is configured to: in a case that a terminal meets a triggering condition for CSI prediction and the terminal receives first information, perform CSI prediction to obtain predicted CSI content, where the first information is used to indicate the terminal to perform CSI prediction. The terminal embodiments correspond to the foregoing terminal-side method embodiments, and the implementation processes and implementations of the foregoing method embodiments can be applied to the terminal embodiments, with the same technical effects achieved. Specifically, FIG. 11 is a schematic diagram of a hardware structure of a terminal for implementing the embodiments of this application.

The terminal 1100 includes but is not limited to at least part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the terminal 1100 may further include a power supply (for example, a battery) supplying power to the components, and the power supply may be logically connected to the processor 1110 through a power management system. In this way, functions such as charge management, discharge management, and power consumption management are implemented by using the power management system. The structure of the terminal shown in FIG. 11 does not constitute any limitation on the terminal. The terminal may include more or fewer components than shown in the figure, or a combination of some components, or the components disposed differently. Details are not described herein again.

It can be understood that in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, and the like. The user input unit 1107 may include at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or a power on/off key), a trackball, a mouse, a joystick, and the like. Details are not described herein.

In this embodiment of this application, the radio frequency unit 1101 receives downlink data from a network-side device, and then sends the downlink data to the processor 1110 for processing. In addition, the radio frequency unit 1101 may send uplink data to the network-side device. Generally, the radio frequency unit 1101 includes but is not limited to an antenna, an amplifier, a transceiver, a coupler, a low noise amplifier, a duplexer, and the like.

The memory 1109 may be configured to store software programs or instructions and various data. The memory 1109 may include a first storage area for storing a program or instruction and a second storage area for storing data. The first storage area may store an operating system, an application program or instruction required by at least one function (for example, a sound playback function or an image playback function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1109 in the embodiments of this application includes but is not limited to these and any other suitable types of memories.

The processor 1110 may include one or more processing units. Optionally, an application processor and a modem processor may be integrated in the processor 1110. This application processor primarily processes operations involving an operating system, user interfaces, application programs, and the like. The modem processor primarily processes radio communication signals, for example, being a baseband processor. It can be understood that the modem processor may alternatively be not integrated in the processor 1110.

The processor 1110 is configured to: in a case that the terminal meets a triggering condition for CSI prediction and the terminal receives first information, perform, for the terminal, CSI prediction to obtain predicted CSI content, where the first information is used to indicate the terminal to perform CSI prediction.

The terminal provided in this embodiment of this application is capable of implementing the processes implemented in the method embodiment shown in FIG. 6, with the same technical effects achieved. To avoid repetition, details are not described herein again.

An embodiment of this application further provides a network-side device, including a processor and a communication interface. The communication interface is configured to send first information, where the first information is used to indicate a terminal to perform CSI prediction. The network-side device embodiments correspond to the foregoing network-side device method embodiments, and the implementation processes and implementations of the foregoing method embodiments can be applied to the network-side device embodiments, with the same technical effects achieved.

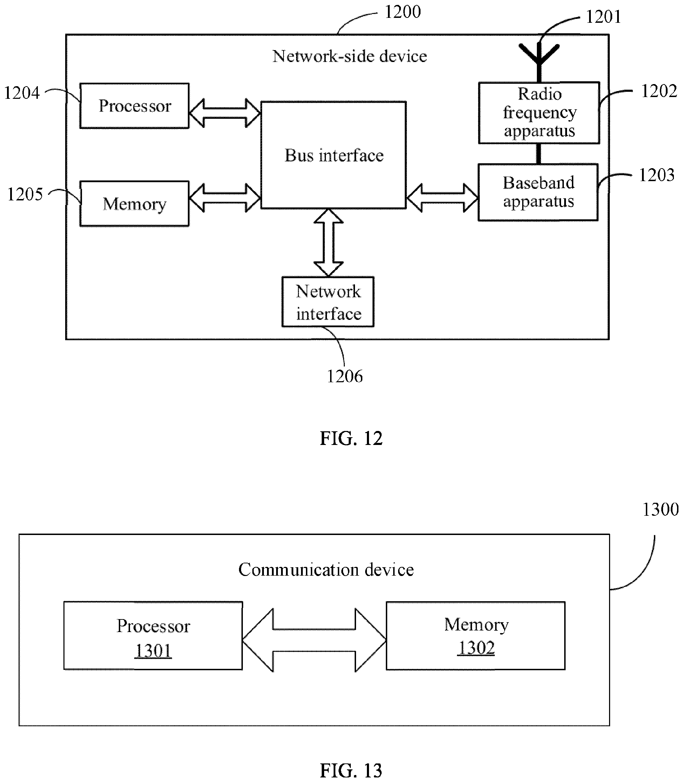

Specifically, an embodiment of this application further provides a network-side device. As shown in FIG. 12, the network-side device 1200 includes an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives information by using the antenna 1201, and sends the received information to the baseband apparatus 1203 for processing. In a downlink direction, the baseband apparatus 1203 processes to-be-sent information, and sends the information to the radio frequency apparatus 1202; and the radio frequency apparatus 1202 processes the received information and then sends the information out by using the antenna 1201.

The method executed by the network-side device in the foregoing embodiments can be implemented in the baseband apparatus 1203, and the baseband apparatus 1203 includes a baseband processor.

The baseband apparatus 1203 may include, for example, at least one baseband board, where a plurality of chips are disposed on the baseband board. As shown in FIG. 12, one of the chips is, for example, a baseband processor, and is connected to the memory 1205 through the bus interface, to invoke a program in the memory 1205 to perform the operations of the network device shown in the foregoing method embodiments.

The network-side device may further include a network interface 1206, where the interface is, for example, a common public radio interface (Common Public Radio Interface, CPRI).

Specifically, the network-side device 1200 in this embodiment of this application further includes: an instruction or program stored in the memory 1205 and capable of running on the processor 1204. The processor 1204 invokes the instruction or program in the memory 1205 to execute the method executed by the modules shown in FIG. 10, with the same technical effects achieved. To avoid repetition, details are not repeated herein.

Optionally, as shown in FIG. 13, an embodiment of this application further provides a communication device 1300, including a processor 1301, a memory 1302, and a program or instruction stored in the memory 1302 and capable of running on the processor 1301. For example, when the communication device 1300 is a terminal and when the program or the instruction are executed by the processor 1301, the steps of the foregoing embodiments of the method shown in FIG. 6 are implemented, with the same technical effects achieved. When the communication device 1300 is a network-side device and when the program or the instruction are executed by the processor 1301, the steps of the foregoing embodiments of the method shown in FIG. 7 are implemented, with the same technical effects achieved. To avoid repetition, details are not described herein again.

An embodiment of this application further provides a readable storage medium, where a program or an instruction is stored in the readable storage medium. When the program or the instruction is executed by a processor, the processes of the foregoing method embodiments shown in FIG. 6 or FIG. 7 are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or an instruction to implement the processes of the foregoing method embodiments in FIG. 6 or FIG. 7, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a storage medium, and when being executed by at least one processor, the computer program product is configured to implement the processes of the foregoing method embodiments shown in FIG. 6 or FIG. 7, with the same technical effects achieved. To avoid repetition, details are not repeated herein.

An embodiment of this application further provides a communication device, configured to perform the processes of the foregoing method embodiments shown in FIG. 6 or FIG. 7, with the same technical effects achieved. To avoid repetition, details are not described herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A channel state information CSI prediction method, comprising:
in a case that a terminal meets a triggering condition for CSI prediction and the terminal receives first information, performing, by the terminal, CSI prediction to obtain predicted CSI content, wherein the first information is used to indicate the terminal to perform CSI prediction.

2. The method according to claim 1, wherein the performing, by the terminal, CSI prediction to obtain predicted CSI content comprises:
activating, by the terminal, a CSI prediction model according to the first information, and performing CSI prediction through the activated CSI prediction model to obtain the predicted CSI content; wherein
input information of the CSI prediction model comprises CSI acquired from historical measurements on CSI-RS resources obtained by the terminal.

3. The method according to claim 2, wherein the activating, by the terminal, a CSI prediction model according to the first information, and performing CSI prediction through the activated CSI prediction model to obtain the predicted CSI content comprises:
obtaining, by the terminal, a to-be-activated CSI prediction model and a sample threshold for the CSI prediction model according to the first information;
activating, by the terminal, a corresponding CSI prediction model; and
in a case that an amount of CSI measurement data of the terminal is greater than or equal to the sample threshold for the CSI prediction model, performing, by the terminal, CSI prediction through the activated CSI prediction model to obtain the predicted CSI content;
or,
obtaining, by the terminal, a to-be-activated CSI prediction model according to the first information;
activating, by the terminal, a corresponding CSI prediction model; and
in a case that an amount of CSI measurement data of the terminal is greater than or equal to the sample threshold for the CSI prediction model, performing, by the terminal, CSI prediction through the activated CSI prediction model to obtain the predicted CSI content.

4. The method according to claim 3, wherein the to-be-activated CSI prediction model is a CSI prediction model corresponding to location information of the terminal, or the to-be-activated CSI prediction model is a CSI prediction model corresponding to a channel characteristic measured.

5. The method according to claim 2, wherein the CSI prediction model is configured by a network-side device.

6. The method according to claim 1, wherein before the receiving first information, the method further comprises:
sending, by the terminal, second information through a first resource, wherein the second information is used to indicate that the terminal meets the triggering condition of CSI prediction; wherein
the first information is sent by the network-side device in a case that energy on the first resource is detected to be greater than or equal to a first threshold.

7. The method according to claim 1 or 6, wherein the triggering condition for CSI prediction comprises one or more of the following:
a difference between the latest CSI content and a first value is greater than or equal to a second threshold, and the first value is determined based on CSI contents of previous consecutive cycles;
a difference between two most recent consecutive CSI contents is greater than or equal to a third threshold;
a location area identifier currently received by the terminal is different from a location area identifier previously received by the terminal;
hybrid automatic repeat request HARQ fails a plurality of times in one cycle; and
a variation of a moving speed of the terminal is greater than or equal to a fourth threshold.

8. The method according to claim 1, wherein the method further comprises:
reporting, by the terminal, the predicted CSI content and/or third information to a network-side device, wherein the third information is used for assisting the terminal in CSI prediction by the network-side device.

9. The method according to claim 8, wherein the third information indicates the network-side device to stop sending a CSI-RS.

10. The method according to claim 9, wherein the third information comprises one or more of the following:
fourth information, wherein the fourth information is used to indicate a time for reporting the predicted CSI content by the terminal;
fifth information, wherein the fifth information indicates an offset time for sending a CSI-RS by the network-side device; and
sixth information, wherein the sixth information indicates an offset time for reporting CSI content by the terminal.

11. The method according to claim 8, wherein the third information indicates the network-side device to send a CSI-RS based on a preconfigured time.

12. The method according to claim 11, wherein the third information comprises one or more of the following:
seventh information, wherein the seventh information is used to indicate expiration of a time for reporting the predicted CSI content by the terminal; and
eighth information, wherein the eighth information indicates that the time for reporting the predicted CSI content by the terminal is less than one CSI measurement reporting time.

13. The method according to claim 8, wherein before the reporting, by the terminal, the predicted CSI content to a network-side device, the method further comprises:
starting, by the terminal, a timer; and
if the timer expires, stopping, by the terminal, CSI prediction and continuing to perform CSI measurement; otherwise, continuing, by the terminal, to perform CSI prediction.

14. The method according to claim 13, wherein the timer indicates a time for continuously reporting the predicted CSI content by the terminal, or the timer indicates a validity time of the CSI prediction model.

15. The method according to claim 8, wherein before the reporting, by the terminal, the predicted CSI content to a network-side device, the method further comprises:
starting, by the terminal, a counter; and
if the counter exceeds a fifth threshold, stopping, by the terminal, CSI prediction and continuing to perform CSI measurement; otherwise, continuing, by the terminal, to perform CSI prediction.

16. The method according to claim 15, wherein the counter indicates a maximum number of cycles for reporting the predicted CSI content supported by the terminal, or the counter indicates the maximum number of times for reporting the predicted CSI content by the terminal.

17. The method according to claim 13 or 15, wherein the method further comprises:
sending, by the terminal, information about the timer or counter to the network-side device.

18. The method according to claim 2, wherein a prediction granularity of the CSI prediction model comprises any one of the following:
CSI of one time unit;
CSI at a retransmission time;
CSIs of all time units within one CSI measurement reporting cycle; and
CSIs of all time units within each CSI measurement reporting cycle.

19. The method according to claim 2, wherein a granularity for reporting the predicted CSI content comprises any one of the following:
one CSI content predicted by the CSI prediction model;
batch reporting of CSI contents within a plurality of time units or cycles predicted by the CSI prediction model; and
reporting of all CSI contents within a plurality of time units or cycles predicted by the CSI prediction model.

20. A CSI prediction method, comprising:
sending, by a network-side device, first information, wherein the first information is used to indicate a terminal to perform CSI prediction.

21. The method according to claim 20, wherein the sending, by a network-side device, first information comprises:
receiving, by the network-side device, second information through a first resource, wherein the second information is used to indicate that the terminal meets the triggering condition of CSI prediction; and
in a case that the network-side device detects an energy on the first resource being greater than or equal to a first threshold, sending, by the network-side device, the first information.

22. The method according to claim 20 or 21, wherein the triggering condition for CSI prediction comprises one or more of the following:
a difference between the latest CSI content and a first value is greater than or equal to a second threshold, wherein the first value is determined based on CSI contents of consecutive cycles;
a difference between two most recent consecutive CSI contents is greater than or equal to a third threshold;
a location area identifier currently received by the terminal is different from a location area identifier previously received by the terminal;
HARQ fails a plurality of times in one cycle; and
a variation of a moving speed of the terminal is greater than or equal to a fourth threshold.

23. The method according to claim 20, wherein the method further comprises:
receiving, by the network-side device, predicted CSI content and/or third information reported by the terminal, wherein the third information is used for assisting the terminal in CSI prediction by the network-side device.

24. A CSI prediction apparatus, applied to a terminal and comprising:
a prediction module, configured to: in a case that the terminal meets a triggering condition for CSI prediction and the terminal receives first information, perform, for the terminal, CSI prediction to obtain predicted CSI content, wherein the first information is used to indicate the terminal to perform CSI prediction.

25. A CSI prediction apparatus, applied to a network-side device and comprising:
a fourth sending module, configured to send first information, wherein the first information is used to indicate a terminal to perform CSI prediction.

26. A communication device, comprising a processor, a memory, and a program or an instruction stored in the memory and capable of running on the processor, wherein when the program or the instruction is executed by the processor, the steps of the method according to any one of claims 1 to 23 are implemented.

27. A readable storage medium, wherein the readable storage medium stores a program or an instruction, and when the program or the instruction is executed by a processor, the steps of the method according to any one of claims 1 to 23 are implemented.
